# EUROPEAN PATENT APPLICATION

(11) **EP 2 284 590 A1**
(43) Date of publication of application: **16.02.2011**
(21) Application number: 10157942.3
(22) Date of filing: 26.03.2010
(51) Int. Cl.: G02B 13/16, G02B 17/08

(54) **Optical System**

(30) Priority: 31.07.2009 KR 20090070572
(71) Applicant: Samsung Electronics Co., Ltd., Suwon-si, Gyeonggi-do 442-742 (KR)
(72) Inventor: Kim, Sung-tae, Seoul (KR); Nho, Jeong-ho, Gyeonggi-do (KR)
(74) Representative: Rooney, John-Paul

(57) **Abstract**

An optical system is provided. The optical system includes an illumination system and a projection system. The illumination system includes a light source, a light guide unit, a first relay lens and a second relay lens, a reflection mirror, a reflection lens, and an image unit which are arranged sequentially along a light axis. The reflection lens includes a first surface which is coated with light-transmitting material and a second surface which has a reflection coating surface so that the light passing through the first surface is reflected.

## Description

### CROSS-REFERENCE TO RELATED APPLICATIONS

This application claims priority from Korean Patent Application No. 10-2009-0070572, filed on July 31, 2009, in the Korean Intellectual Property Office, the disclosure of which is incorporated herein in its entirety by reference.

### BACKGROUND

### 1. Field of the Invention

Apparatuses consistent with the present disclosure relate to replacing a prism with other optical elements in an illumination system of an optical system which is used in a display.

### 2. Description of the Related Art

Generally, an optical system comprises an illumination system and a projection system. The illumination system transfers light from a light source through a lens and a mirror to an image unit, such as, for example, a digital micro-mirror device (DMD), an active-matrix organic light-emitting diode (AMOLED), and a thin film transistor liquid crystal display (TFT-LCD). The projection system projects an image formed on the image unit to a screen.

Illumination systems used in an optical system may be classified into illumination systems using a prism method, a spherical mirror method, a field lens method, and a plane mirror method.

The prism method employs a Total Internal Reflection (TIR) prism or a Reverse Total Internal Reflection (RTIR) prism. The TIR and RTIR prisms have high efficiency, but are expensive.

The spherical mirror method employs a spherical mirror instead of a prism. The spherical mirror method is disadvantageous because it is difficult to achieve high efficiency in illumination. The low efficiency in illumination of an illumination system using the spherical mirror method is due to the spherical mirror having large optical power, and due to a large offset difference between the projection system and the image unit.

The field lens method substitutes, on a fore portion of an image unit, a prism with a lens having large optical power. However, the lens is disadvantageous because it strays light and causes ghost images to appear.

The plane mirror method employs a plane mirror instead of a prism. However, by using the plane mirror method, the intensity of light and uniformity of illumination are worse than those of the prism method.

Accordingly, there is a need for developing new inexpensive and high performance illumination systems which can replace a prism type illumination system.

### SUMMARY

Exemplary embodiments overcome the above disadvantages and other disadvantages not described above. Also, the present teaching is not required to overcome the disadvantages described above, and an exemplary embodiment may not overcome any of the problems described above.

The present disclosure provides an optical system having an illumination system with a structure, simpler than the structure of an illumination system employing a prism method.

According to an exemplary aspect of the present disclosure, an optical system, including an illumination system and a projection system is provided. The illumination system may include a light source, a light guide unit, a relay lens, a reflection mirror, a reflection lens, and an image unit which are arranged sequentially along a light axis. The reflection lens may include a first surface which is coated with light-transmitting material and a second surface with a reflection coating surface which reflects the light passing through the first surface.

The first surface of the reflection lens may be formed as a concave surface, a plane surface, a convex surface, and an aspheric surface. The second surface of the reflection lens may be formed as a concave surface, a plane surface, a convex surface, and an aspheric surface.

The reflection mirror may be formed as a concave mirror, a plane mirror, a convex mirror, and an aspheric mirror.

The light guide unit may include a light tunnel or a fly eye panel.

### BRIEF DESCRIPTION OF THE DRAWINGS

The above and/or other aspects of the present invention will be more apparent by describing in detail exemplary embodiments thereof with reference to the attached drawings, in which:

FIG. 1 is a schematic view illustrating an optical system according to an exemplary embodiment of the present invention; and

FIGS. 2 to 10 are sectional views illustrating a reflection lens according to various exemplary embodiments of the present invention.

### DETAILED DESCRIPTION OF EXEMPLARY EMBODIMENTS

Hereinafter, the present disclosure will be described in greater detail with reference to the accompanying drawings, in which exemplary embodiments of the invention are shown.

In the following description, the same reference numerals are used for the same elements when they are depicted in different drawings. The matters defined in the description, such as detailed construction and elements, are provided to assist in a comprehensive understanding of the invention. Thus, it is apparent that the present teaching can be carried out without those specifically defined matters. Also, functions or elements known in the related art are not described in detail since they would obscure the disclosure with unnecessary detail.

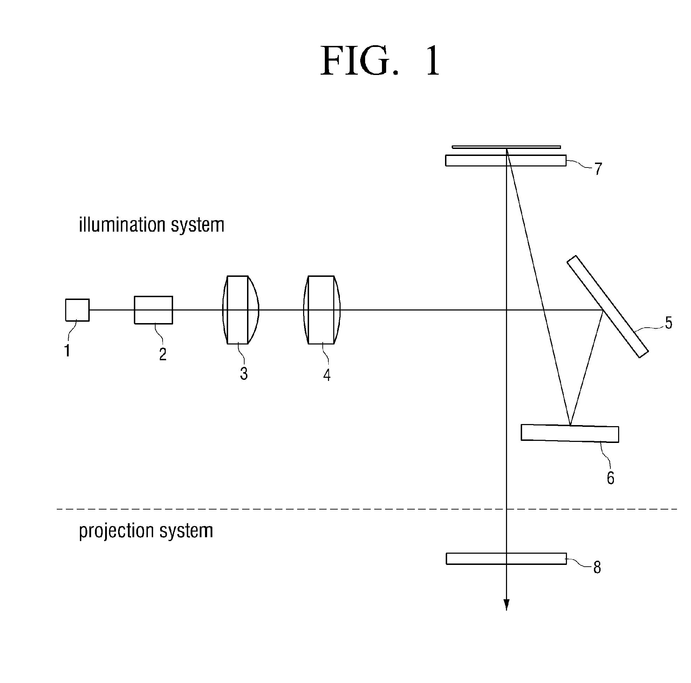

FIG. 1 is a schematic view illustrating an optical system according to an exemplary embodiment of the present invention.

Referring to FIG. 1, an optical system according to an exemplary embodiment comprises an illumination system and a projection system. The illumination system comprises a light source 1, a light guide unit 2, a first relay lens 3 and a second relay lens 4, a reflection mirror 5, a reflection lens 6, and an image unit 7. The projection system comprises a projection lens 8 which projects an image, formed on the image unit 7, to a screen.

The light guide unit 2 uniformizes light emitted from the light source 1. The light guide unit 2 can be implemented as one of a fly eye panel and a light tunnel.

The first and second relay lenses 3 and 4 are provided to reduce loss of light which is uniformized by passing through the light guide unit 2. The light passing through the first and second relay lenses 3 and 4 enters the reflection mirror 5.

The reflection mirror 5 is configured as a plane mirror, but the shape of the reflection mirror 5 is not limited thereto. The reflection mirror 5 may also be formed as one of a convex mirror, a concave mirror and an aspheric mirror. This will be explained later in detail. The reflection mirror 5 reflects the light from the light source 1, which has passed through the light guide unit 2 and the first and second relay lenses 3 and 4, to the reflection lens 6.

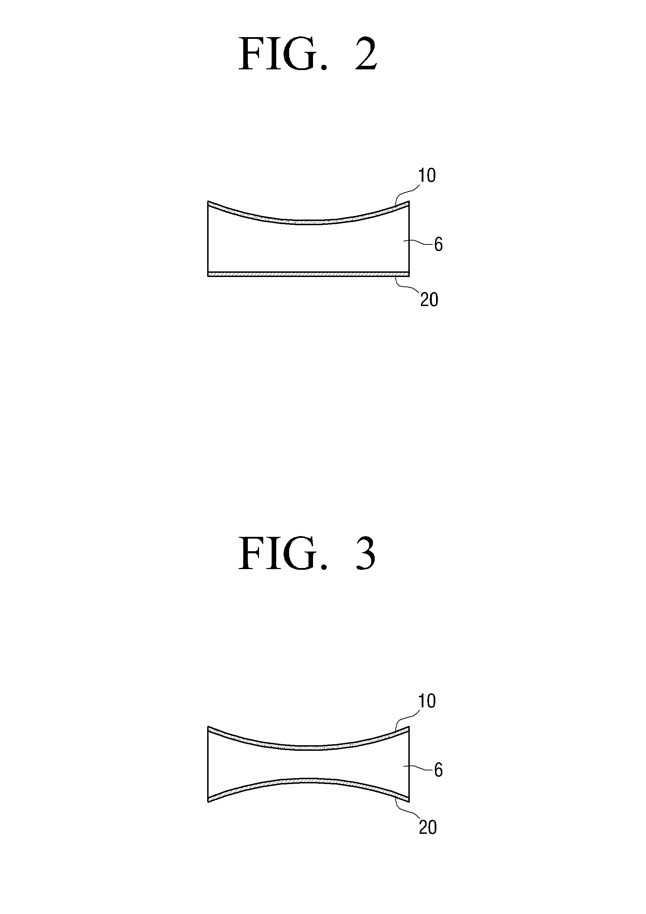

The reflection lens 6 is a relay lens which transfers light of the light source 1 to the image unit 7. The reflection lens 6 includes a first surface 10 and a second surface 20, as shown in FIGS. 2 to 10. The first surface 10 is coated so that light enters the first surface without being reflected and the second surface 20 is coated so that the light passing through the first surface is reflected from the second surface 20. The coating of the first surface 10 is an anti-reflection coating which enables the light to enter the reflection lens 6 without any loss of light.

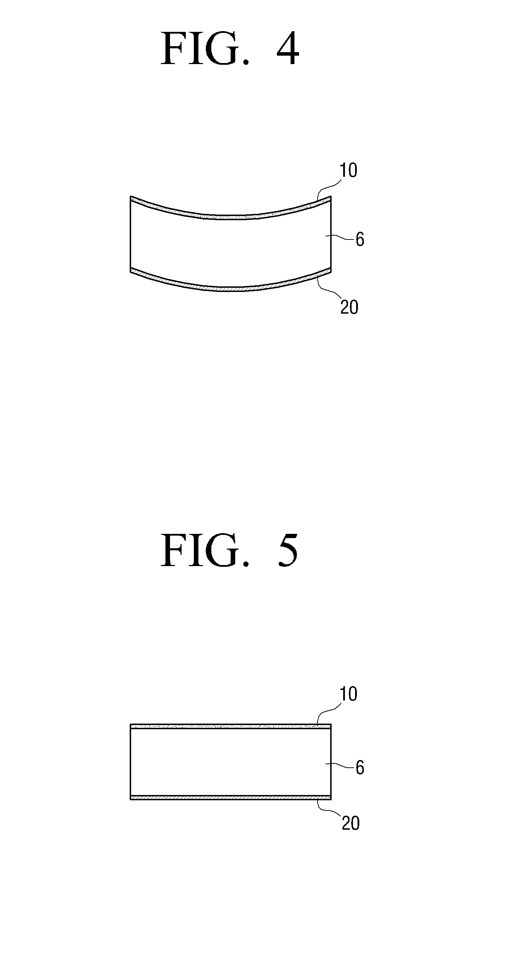

The first and second surfaces 10 and 20 of the reflection lens 6 may be formed as one of a concave surface, a convex surface, or an aspheric surface, as shown in FIGS. 2 to 10. FIGS. 2 to 4 illustrate a reflection lens with a first surface 10, which is configured as a concave surface, and a second surface 20, which is configured as a plane surface (as shown in FIG. 2), a concave surface (as shown in FIG. 3), or a convex surface (as shown in FIG. 4). The concave and convex surfaces may be fabricated to have spherical surfaces or aspheric surfaces.

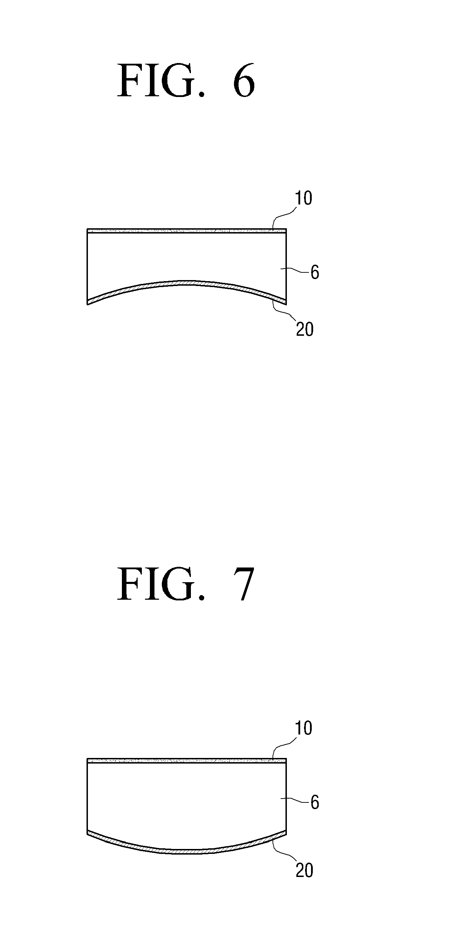

Additionally, the first surface 10 may be configured as a plane surface, as shown in FIGS. 5 to 7, and the second surface 20 may be configured as a plane surface (as shown in FIG. 5), a concave surface (as shown in FIG. 6), or a convex surface (as shown in FIG. 7).

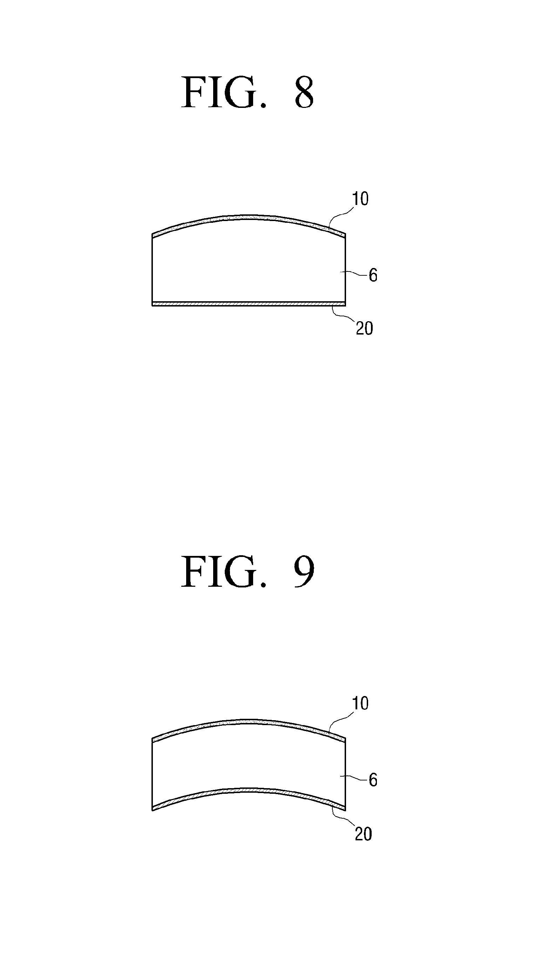

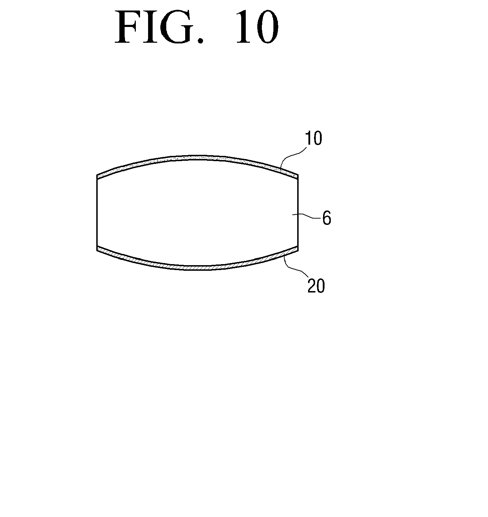

Alternatively, the first surface 10 may be configured as a convex surface, as shown in FIGS. 8 to 10, and the second surface 20 may be configured as one of a plane surface (as shown in FIG. 8), a concave surface (as shown in FIG. 9), or a convex surface (as shown in FIG. 10).

As described above, the reflection mirror 5 may be formed as a plane surface, as shown in FIG. 1. However, it may also be formed as one of a concave surface, a convex surface, or an aspheric surface according to the shape of the reflection lens 6. That is, if the first surface 10 and/or the second surface 20 of the reflection lens 6 is configured as one of a concave, a convex or an aspheric surface, respectively, the reflection mirror 5 may be configured as a plane surface as shown in FIG. 1. But if both the first and second surfaces 10 and 20 of the reflection lens 6 are configured as plane surfaces, the reflection mirror 5 may be configured as one of a concave, a convex or an aspheric surface. As a result, the intensity of the light emitted from the light source 1 is enhanced.

Thus, if one of a concave, a convex, or an aspheric surface is formed on either the reflection mirror 5 or the reflection lens 6, the intensity and uniformity of light entering the image unit 7 through the first and second relay lenses 3 and 4 may be enhanced.

In addition, if the light guide unit 2, the first and second relay lenses 3 and 4, the reflection mirror 5, and the reflection lens 6 are sequentially arranged to configure the illumination system, the illumination system according to the exemplary embodiment of the present invention may be manufactured at low cost and without compromising efficiency, compared to the conventional illumination system which uses a relatively expensive prism.

In other words, based on the exemplary embodiment, a highly efficient illumination system can be fabricated at lower cost than that of a conventional illumination system employing a prism method.

The foregoing exemplary embodiments and advantages are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical system, comprising:
an illumination system; and
a projection system,
wherein the illumination system comprises a light source, a light guide unit, at least one relay lens, a reflection mirror, a reflection lens, and an image unit which are arranged sequentially along a light axis, and
wherein the reflection lens comprises:
a first surface which is coated with a light-transmitting material; and
a second surface comprising a reflection coating which reflects the light passing through the first surface.

2. The optical system as claimed in claim 1, wherein the first surface of the reflection lens is a concave surface, a plane surface, a convex surface, or an aspheric surface.

3. The optical system as claimed in one of claims 1 and 2, wherein the second surface of the reflection lens is a concave surface, a plane surface, a convex surface, or an aspheric surface.

4. The optical system as claimed in claim 1, wherein the reflection mirror is a concave mirror, a plane mirror, a convex mirror, or an aspheric mirror.

5. The optical system as claimed in claim 1, wherein the light guide unit comprises a light tunnel or a fly eye panel.
